Europäisches Patentamt

European Patent Office

Office européen des brevets

(19)

(11) **EP 1 195 582 A1**

(12) ## EUROPEAN PATENT APPLICATION

(43) Date of publication:
**10.04.2002 Bulletin 2002/15**

(51) Int Cl.7: **G01D 5/353**, G01L 1/24

(21) Application number: **00121314.9**

(22) Date of filing: **09.10.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Eidgenössische Technische Hochschule Zürich**
**8092 Zürich (CH)**

(72) Inventors:
- **Lerber, Tuomo**
  **00650 Helsinki (FI)**
- **Romann, Albert**
  **8038 Zürich (CH)**

(74) Representative: **Blum, Rudolf Emil Ernst et al**
c/o E. Blum & Co
**Patentanwälte**
**Vorderberg 11**
**8044 Zürich (CH)**

(54) **Fiber optic sensor with an optical resonator**

(57) Light from a light source (1) is fed into a resonator comprising an resonator fiber (3) and highly reflective couplers (4, 5). Light coupled out of the resonator fiber (3) is detected by a light sensor (7). The resonator is built such that its losses depend on a physical parameter to be measured. The light fed to the light source is switched on and off in step-like manner and the corresponding build-up or decay of the light detector signal is used to determine the time constant of the resonator and therefrom the physical parameter. It is found that, even when light of a comparatively broad bandwidth is used, accurate measurements of the time constant are possible.

light source

driver

signal processing

light detector

**Fig. 1**

EP 1 195 582 A1

**Description**

The invention relates to a method for measuring at least one physical parameter using an optical resonator according to the preamble of claim 1.

It has been known to measure physical parameters in optical resonators. The resonators, which can e.g. be ring resonators or linear resonators, are provided with a means that affects their loss depending on the physical parameter to be measured.

US 4 887 901 discloses the application of a resonator based on an optical fiber. A mirror is placed at one end of the fiber and the reflectivity at this end depends on the distance between the mirror and the fiber. A periodically varying light signal is coupled into the resonator and the phase shift to the light reflected from the resonator is measured. The phase shift depends on the loss in the resonator and therefore on the distance between the fiber and the mirror.

The problem to be solved in the present application lies in providing a simple and sensitive method of the type mentioned above for measuring a physical parameter with high sensitivity and in simple manner.

This problem is solved by the method of claim 1. As is shown below, using a low loss resonator increases sensitivity of the device considerably.

The loss of the resonator should not exceed 20% per round-trip. If a linear resonator with two reflectors is used, the reflectivity of the reflectors should be at least 90%.

Preferably, the intensity, polarization and/or wavelength of the light fed to the resonator is changed in step-wise manner, e.g. by being shut on or off, and the time constant of the corresponding build-up or decay of the amount of light within the resonator is measured, e.g. by determining the power of light coupled out of the cavity. The "time constant" can be any quantity suited for expressing the speed of build-up or decay of the light.

In one preferred embodiment, at least one grating reflector is arranged in the fiber, e.g. as an index or an absorption grating. Such grating reflectors can be integrated easily into fibers. The grating reflector can be used for measuring the physical parameter. For this purpose, the reflector is arranged and built in such a way that its reflectivity is affected by the physical parameter. For instance, the physical parameter could be or could affect temperature, fiber strain or fiber tension, all of which can affect the wave vector of the reflector.

The method can e.g. be applied to near-field optical microscopy. Here, one end of the fiber is tapered with an evanescent optical field extending from it. The tip of the taper is used for scanning an object. In this case, the low-loss resonator arrangement provides a much higher sensitivity than the one reached in conventional near-field optical microscopy.

The method can also be applied for measuring electric or magnetic fields. For this purpose, the fiber is exposed to the field, which changes the loss in the fiber via the electro-optic or magneto-optic effect by field induced absorption or refractive index changes.

Further preferred embodiments of the invention as well as applications are described in the dependent claims as well as the following description. This description makes references to the enclosed drawings, which show:

Fig. 1 the basic set-up a resonator operated in transmission,
Fig. 2 ring-up and ring-down effects in the resonator,
Fig. 3 a resonator fiber with flattened surface for strong outreaching evanescent fields,
Fig. 4 a resonator fiber with grating reflectors,
Fig. 5 a resonator fiber with mirror ends spliced to the feed fibers,
Fig. 6 a further set-up of a resonator operated in reflection,
Fig. 7 a resonator fiber with a taper,
Fig. 8 a ring resonator,
Fig. 9 a set-up with a pumped resonator, and
Fig. 10 a fibre with a slanted grating reflector.

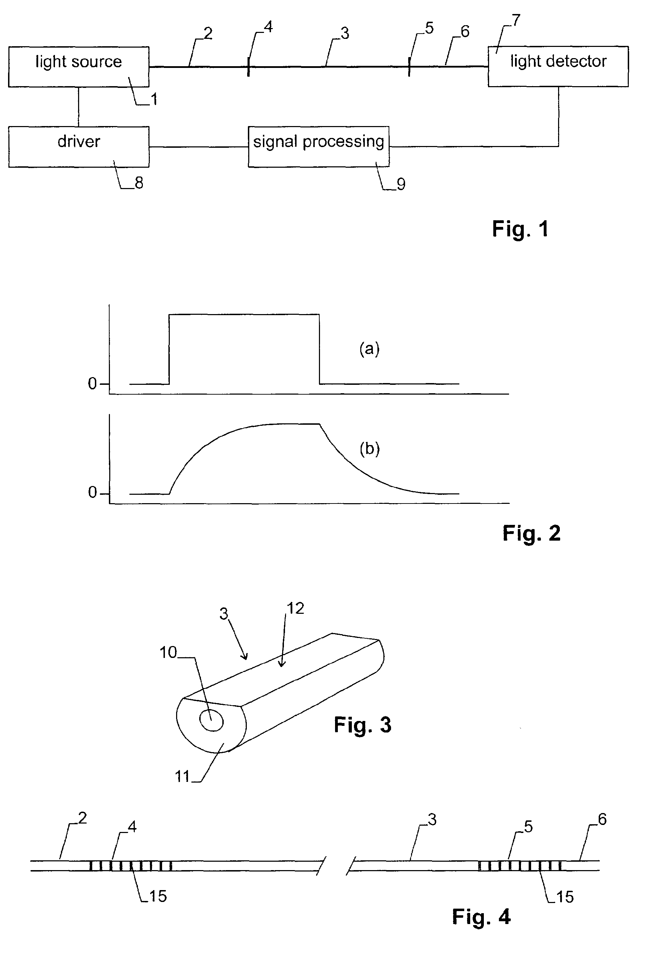

A possible basic set-up of the invention is shown in Fig. 1. It comprises a light source 1, the output of which is coupled into a first feed fiber 2. From first fiber 2, it passes into a resonator fiber 3. Two couplers 4, 5 are arranged at the ends of resonator fiber 3. Each coupler has a reflectivity of at least 90% and a transmittivity of not more than 10% to form a low loss resonator between them. The light emitted from second coupler 5 is fed into a second feed fiber 6 and led to a light detector 7.

The set-up further comprises a driver circuit 8 for driving the light source and a signal processing unit 9 for processing the signal from light detector 7. The operation of these parts is described below.

The optical resonator of Fig. 1 has the properties of a Fabry-Perot resonator. When light at a resonance frequency is fed into the resonator, light intensity within the resonator will start to build up to reach a maximum value. When the light source is switched off, the light intensity will start to decrease until it reaches zero. This is depicted in Fig. 2, where line (a) shows the input intensity and line (b) shows the output intensity in second feed fiber 6.

The build-up of the output intensity after a step-wise increase of input intensity is described by the formula

$$I = k \cdot I_0 \cdot \left(1 - e^{-t / \tau_{up}}\right), \qquad (1)$$

where $\tau_{up}$ is the time constant determining the speed of build-up (ring-up time). Similarly, decay after a step-wise decrease of input intensity is described by

$$I = k \cdot I_0 \cdot e^{-t/\tau_{down}}, \qquad (2)$$

where $\tau_{down}$ is the time constant determining the speed of the decay (ring-down time). Ring-up and ring-down times are equal and therefore plainly called time constant $\tau$. This time constant $\tau$ depends on the cavity properties as follows

$$\tau = \frac{L \cdot n_{eff}}{c} \cdot \frac{1}{\left|\ln\left(V \cdot \sqrt{R_1 \cdot R_2}\right)\right|}, \qquad (3)$$

where $L$ is the resonator length, $n_{eff}$ is the effective refractive index of the fiber, $c$ the speed of light, $V$ the loss factor and $R_1$ and $R_2$ the reflectivities of couplers 4 and 5. Loss factor $V$ is defined as $1 - V = loss\ per\ path,$ implying that the factor is 1 if there are no losses and 0 if the resonator loss is total. (In case of more complicated cavities with more than two reflectors or couplers, additional reflectivities have to be inserted in Eq. (3)).

The quantity $1 - V \cdot \sqrt{R_1 \cdot R_2}$ is herein called the "optical loss of the resonator".

As can be seen by Eq. (3), the time constant $\tau$ depends on the properties $L$, $n_{eff}$, $V$, $R_1$ and $R_2$ of the cavity. Hence, by determining the time constant $\tau$ in signal processing unit 9, any physical parameter that affects these properties can be measured.

The sensitivity $s = \Delta\tau/\tau$ of the time constant in respect to a variation of the parameters in Eq. (3) is given by the following approximation:

$$s = \frac{\Delta\tau}{\tau} = \frac{1}{\left|\ln\left(V \cdot \sqrt{R_1 \cdot R_2}\right)\right|} \left[\frac{\Delta R_1}{2R_1} + \frac{\Delta R_2}{2R_2} + \frac{\Delta V}{V}\right] + \frac{\Delta L}{L} + \frac{\Delta n_{eff}}{n_{eff}}. \qquad (4)$$

As can be seen from Eq. (4), the sensitivity to changes of $R_1$, $R_2$ or $V$ becomes very large if $V \cdot \sqrt{R_1 \cdot R_2}$ is close to 1 or, equivalently, the optical loss of the resonator is close zero, e.g. below 20%. Hence, high sensitivity can be reached if the physical parameter to be measured affects the loss factor $V$ or the couplers' reflectivities $R_1$, $R_2$. If, for example, $V = 0.999$ and $R_1 = R_2 = 0.999$, the factor in front of the square bracket becomes 500.

As it is known to a person skilled in the art, an optical resonator with low loss has narrow-band longitudinal modes. Light within the longitudinal modes can oscillate within the resonator while light at other wavelengths (free spectral range) is rejected by the resonator. If $R_1 = R_2 = 90\%$, $n_{eff} = 1.47$ and $L = 2$ cm or 2 m, the bandwidth of the longitudinal modes is 171 or 1.7 MHz, while the free spectral range is 5.1 GHz or 51 MHz, respectively.

For optimum use of energy, the bandwidth of light source 1 should be smaller than the bandwidth of the longitudinal modes, which, however, requires active locking techniques. If no locking is used, the bandwidth of the light source should preferably be several times larger than the free spectral range in order to excite several (e.g. more than three) longitudinal modes, thereby making the signal less sensitive to frequency fluctuations of the light source or longitudinal modes.

In a preferred embodiment, the bandwidth of the light source is not more than 7000 GHz, since this is the maximum bandwidth that can be handled by chirped grating reflectors. Preferably, the light source is therefore a laser or a narrow bandwith LED, but it can also be a regular LED, in particular when no grating reflectors are used.

As can be seen from Eq. (4), increasing the reflectivities $R_i$ of the couplers 4, 5 leads to an increase in sensitivity. At the same time, however, the ratio between the bandwidth of the longitudinal modes and the free spectral range is decreased. When using a light source with a bandwidth in the order of or larger than the free spectral range, this leads to a decrease of the fraction of light that can be coupled into the resonator and therefore of the available light intensity at light detector 7. However, surprisingly it has been found that the increase in sensitivity more than compensates for the adverse effects of a decrease of light intensity at the detector. Hence, high reflectivity couplers are found to be advantageous even if the bandwidth of the light source is broad enough to excite more than one longitudinal mode of the resonator.

In the following, some examples of possible measurements are provided:

The loss factor $V$ is primarily dependent on absorption and scattering losses within the resonator fiber 3 or at the couplers 4, 5. The physical parameter to be measured can therefore be the absorption and/or scattering of a substance adjacent to said fiber in an outreaching evanescent field of the light. For best sensitivity, resonator fiber 3 should be designed such that it has a strong outreaching evanescent field. This can e.g. be achieved with a fiber as shown in Fig. 3.

The fiber of Fig. 3 has a high index core 10 and a low index mantle 11 with circular or elliptic cross-section except for a flattened surface section 12 approaching core 10. Surface section 12 is used for receiving the substance, the absorption or scattering of which is to be measured. As this surface section is close to core 10, a strong evanescent optical field extends into the substance.

It must be noted that, for high sensitivity, the resonator fiber will usually be longer than depicted in Fig. 3.

An absorption or scattering measurement allows, for example, to determine the presence and concentration of a substance, in either quantitative or qualitative manner. While absorption is usually due to an intrinsic absorption of the substance, scattering can e.g. be caused by Raman, Brioullin or Rayleigh effects.

One possible application is the monitoring of a chemical agent that changes its optical properties and in particular its absorption depending on the physical parameter to be measured. Such a agent can e.g. be a pH-sensitive or temperature sensitive chemical coated to surface section 12 of the fiber of Fig. 3.

$V$ also depends on other losses that the light in the fiber is subjected to. For example, if the resonator fiber is subjected to sufficiently strong electric or magnetic fields, is refractive index, optical activity or absorption can change due to electro-optic or magneto-optic effects. In a preferred embodiment, an asymmetric fiber is used where the light propagation depends on the polarization of the light. In such a fiber, field induced birefringence or optical activity will couple light out of a mode, thereby decreasing the value of $V$. This effect can e.g. be used for measuring electric or magnetic fields.

Losses can also be affected by temperature changes, fiber strain, fiber tension and/or fiber deformation (bend, twist, deformation of cross-section). Therefore, such parameters can be measured by the present invention as well.

Furthermore, $V$ decreases upon fiber degradation, e.g. caused by electric fields, radiation or chemical attack. By measuring the decrease of $V$, an exposition of the fiber to such conditions can be detected.

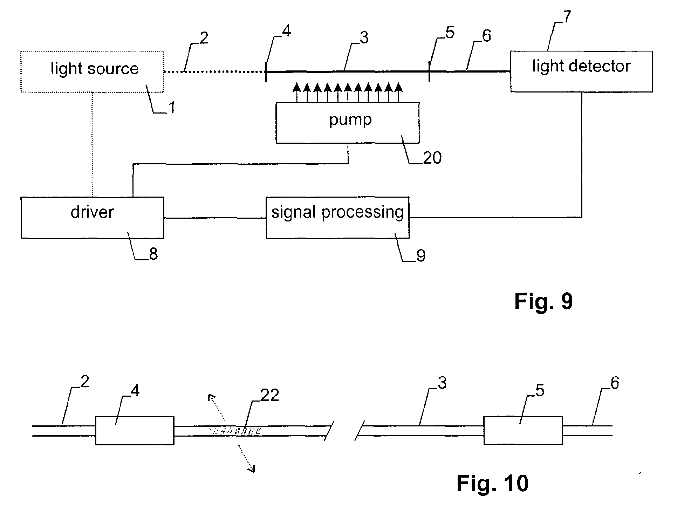

The loss factor $V$ can also be affected by a slanted scattering grating reflector 22 arranged in the fibre between the reflectors as shown in Fig. 10. This type of reflector can scatter some of the light out of the fibre. If the reflectivity of the scattering grating is dependent on the physical parameter to be measured (e.g. because the physical parameter affects the grating spacing via a temperature change of the fibre) the optical loss of the resonator becomes dependent on the parameter and can therefore be measured.

The physical parameter to be measured can also affect the couplers, either by changing their absorption or scattering (see above), or by changing their reflectivity.

Basically, the reflectivity $R_i$ of one or both of the couplers 4, 5 can be changed by most of the effects mentioned above, such as pressure, strain, temperature or electric fields.

Fig. 4 shows an embodiment of the invention where grating reflectors 15, e.g. Bragg reflectors, written into the fiber are used as couplers 4, 5. Using grating reflectors obviates the need for cutting the fiber. Typical maximum reflectivities for grating reflectors are around R = 0.999. They have very narrow bandwidth, typically 1.5 nm, and their wavelength of maximum reflectivity depends strongly on temperature, pressure or strain changes or other effects affecting the grating spacing or refractive index. Exposing at least one of the grating reflectors 15 to a change in temperature, to electric fields or to mechanical stress makes it possible to measure the corresponding physical parameter.

Also, other type of grating reflectors can be used, e.g. with chirped gratings for extended bandwidth.

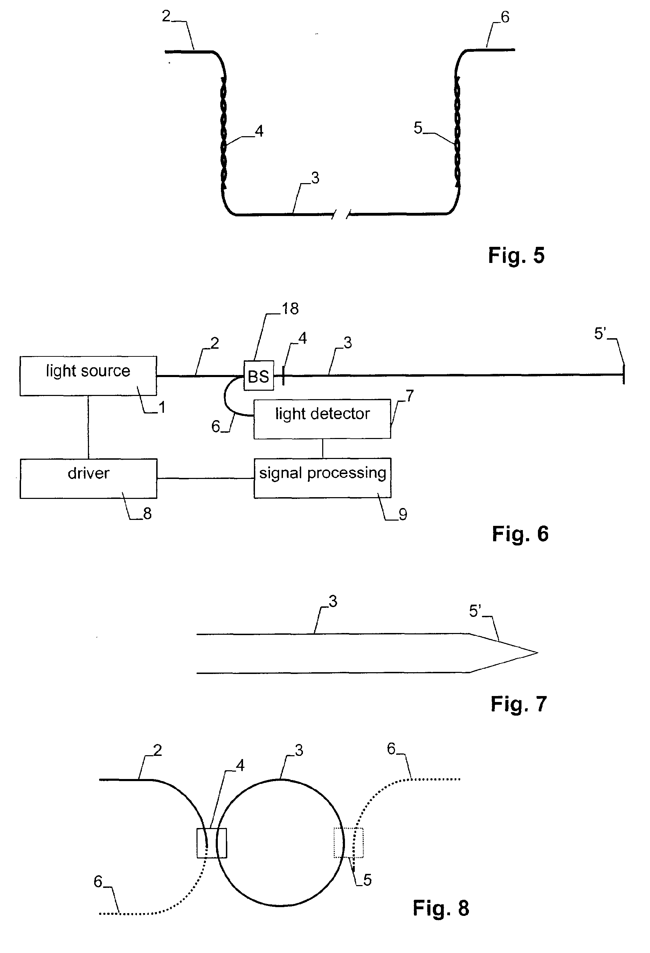

Instead of grating reflectors, mirrors based on dielectric or metallic coatings can be used. Metallic coatings usually have reflectivities R around 0.95, showing only small variation at different wavelengths. High reflectivity dielectric coatings can have reflectivities around 0.9999 or even more, but they show this behaviour for a limited wavelength range only, e.g. 50 nm. After applying such coatings, the resonator fiber 3 can e.g. be spliced with the feed fibers 2 and 6. A corresponding set-up is shown in Fig. 5, where the resonator fiber is spliced to the feed fibers 2 and 6, wherein the couplers 4, 5 are formed by the spliced sections of the fibers.

In the embodiment of Fig. 1, the resonator was operated in transmission. An alternative is shown in Fig. 6, where the resonator is operated in reflection. Here, the light from feed fiber 2 is fed to a beam splitter 18, and from there through coupler 4 into a first end of resonator fiber 3. The second end of resonator fiber 3 is provided with an reflector 5' having a reflectivity of at least 90%. Light coming back through coupler 4 is led to beam splitter 18 and from there through feed fiber 6 to light detector 7.

The embodiment of Fig. 6 can be used in all the applications cited above. It has, however, the advantage that reflector 5' is well accessible and can be affected by the parameter to be measured.

In a preferred embodiment, reflector 5' is formed by a tapered end of resonator fiber 3, such as it is shown in Fig. 7. Such tapers behave as reflectors if the diameter of the waist or tip is smaller than the wavelength of the light. Tapers can provide total internal reflection, and they generate an outreaching evanescent near field at the tip. This field can be used for measuring purposes. If an object is brought into the field, part of the light leaks from the fiber because it is scattered or absorbed by the test material, thus altering the loss of the resonator. This e.g. allows to determine a distance between the end of the fiber and the object and can be applied in scanning microscopy.

In some configurations, light may leak out from the taper. In this case, the taper can optionally be coated partially or completely with a reflecting coating.

In yet another embodiment, the resonator fiber can form a ring resonator, such as it is shown in Fig. 8, wherein resonator fiber 3 forms a ring. Such a ring resonator can again be operated either in transmission or reflection. When operated in transmission, light from feed fiber 2 is coupled through coupler 4 into resonator fiber 3. From there, it is coupled through coupler 5 into feed fiber 6. When operated in reflection, coupler 4 is operated bidirectionally and output feed fiber 6 is attached to coupler 4, while coupler 5 can be dispensed with.

Again, for high sensitivity, the optical loss of the resonator should be below 20%.

In the embodiments of Figs. 1 and 6, the light intensity was modulated by directly controlling light source 1 using driver circuit 8. Alternatively, light source 1 can be operated with constant average power, while modulation of light intensity takes place between light source 1 and resonator fiber 3, e.g. in a light modulator. For instance, the transmittivity of input coupler 4 can be modulated, e.g. using electro-optic or acousto-optic effects. In both these embodiments, the coupling efficiency of coupler 4 is modulated for modulating the light intensity and/or loss within the resonator.

Light source 1 can either be cw or pulsed. When using a pulsed light source with a pulse length much shorter than the roundtrip-time in the resonator, achieving high intensities within the resonator is difficult. In this case, modulating the reflectivity of coupler 4 is advantageous. For coupling a pulse into the resonator, input coupler 4 is switched to a first state with low reflectivity and high transmission (e.g. > 50%). Once the pulse is in the resonator, coupler 4 is switched to a second state with high reflectivity (preferably > 90%) and low transmission, and the decay of the pulse within the cavity can be analyzed by light detector 7 and processing unit 9.

In the embodiments shown so far, the time constant was measured after a step-wise change of light intensity or for the decay of a light pulse. Alternatively, the time constant can also be measured after a step-wise change of light polarization or wavelength.

By changing the polarization of the light being fed to the fiber and by using a resonator fiber 3 and/or a coupler 4 that are polarization dependent, the intensity of the light within the resonator can be changed. Again, build-up and decay processes as shown in Fig. 2 can be observed.

Another way to extract the same information from the resonator is to change the wavelength of the light quickly. If the light source is narrow enough to excite one longitudinal mode of the resonator only, switching the wavelength between a longitudinal mode and free spectral range leads to a build-up and decay as shown in Fig. 2. Similarly, keeping the wavelength constant and changing the effective length $n_{\mathrm{eff}} \cdot L$ of the cavity also allows to switch between a resonant longitudinal mode and free spectral range because the resonance frequency of the resonator is changed.

Quick wavelength switching can be used for enhanced detection sensitivity. If for example a linear fiber resonator is measured in reflection such as shown in Fig. 6, and a light signal of wavelength $\lambda_1$ is used to excite the resonator, and the wavelength is abruptly switched to $\lambda_2$, a beating, exponentially decaying heterodyne signal due to interference can be detected at light detector 7.

Similar heterodyne detection can easily be made with a linear fiber resonator in transmission mode as shown in Fig. 1 if input coupler 4 and output coupler 5 are wavelength selective, e.g. gratings, having their maximum reflectivities at wavelength $\lambda_1$ and much lower reflectivity at wavelength $\lambda_2$. When the wavelength is switched between $\lambda_1$ and $\lambda_2$, a beating exponentially decaying heterodyne signal due to an interference between light of the two wavelengths can be detected at the light detector 7.

A further embodiment of the invention is shown in Fig. 9. Here, resonator fiber 3 has been doped with an active, light emitting medium that can be stimulated using a pump (e.g. a pump light source) 20.

The embodiment of Fig. 9 can either be operated in amplifier mode or in lasing mode. If used in amplifier mode, light from light source 1 is coupled through feed fiber 2 and coupler 4 into resonator fiber 3, where it is amplified by stimulated emission of light from the active medium. In this case, loss factor $V$ in Eqs. (3) and (4) can be replaced by $V \cdot G$, wherein $G$ is the gain of the medium, $G > 1$, which leads to an increase in sensitivity. If gain $G$ is high enough, spontaneous lasing action takes place. In that case, external light source 1 is not required anymore. If pump 20 is switched on or off abruptly, a signal build-up or decay as shown in Fig. 2 can be observed and the time constant $\tau$ of

the resonator can be measured similar as above. The pumping of the active medium can also be sinusoidally modulated, in which case the time constant of the resonator can be calculated from the phase shift between the pump power and the signal from light detector 7. Other modulation schemes can be used as well.

In general, the invention is not limited to step-wise increase or decrease of input or pump light intensities or of coupler reflectivity. The time constant $\tau$ of the resonator can generally be measured by analyzing to response of the resonator to other dynamic light or loss changes, e.g. using phase shift measurements or correlation techniques as known in the state of the art.

A particularly preferred application of the invention is the in-vivo detection of parameters of the living animal or human body.

Optical fibers are thin, flexible and chemically inactive, which makes them suitable for many biomedical applications. Fiber optic sensors can be placed in the body, even at very delicate locations, like inside human arteries.

Biomedical sensors are used to measure a multitude of different parameters, like intravenous pressure, temperature, blood or tissue oxygenation, pH, hemoglobin etc. Fiber optic sensors have also been used for gastroenterology to sense pH of gastric juices or bile-reflux.

A limitation of traditional fiber optic chemical sensors is their low sensitivity. The direct absorption measurement via evanescent field provides insufficient absorption information for a detection of many interesting parameters and many chemicals or proteins are not possible to sense altogether. To overcome this problem, numerous indicator agents has been developed. An indicator agent changes its absorption or refractive index properties according to measured parameter.

The low sensitivity limitation of evanescent field sensors however applies also to an indictor based sensors and therefore absorbing indicator materials are normally located into a separate optrode, which is attached to an end of a fiber. The optrode increases both the sensors size and production costs, and ultimately makes the construction more fragile.

The disclosed invention provides a solution for these problems by increasing the sensitivity of evanescent field direct absorption measurement. With high sensitivity evanescent field absorption sensors many chemical parameters can be measured directly, and if an indicator material is needed, e.g. in case of a pH measurement, an indicator agent can be exposed directly on the fiber surface, e.g. in the form of a coating. The indicator agents are naturally primarily exposed to the region of the fiber where the evanescent field is let to come out, e.g. to flat surface section 12 of the fiber of Fig. 3. In absence of optrodes the diameter of the sensor equals to the diameter of the fiber.

Another solution the disclosed invention provides is the sensing with fiber tapers, such as they are shown in Fig. 7. If a taper is used as an end reflector, then an indicator agent coating with cabability to change the refractive index or absorption according to the measured parameter can be used. E.g. in absence of some measured chemical or protein the refractive index of the reagent coating is such that the taper provides a total internal reflection and the losses of the cavity are low. In presence of the particular chemical or protein the cavity losses are increased responsive to the concentration of the measured parameter.

Resonator fiber 3 (as well as feed fibers 2, 6) are preferably monomode fibers. However, multimode fibers, in particular graded index fibers, can be used as well.

In the above examples, it has been assumed that the optical loss of the resonator is not exceeding 20%. It is to be noted that the loss may, depending on the value of the parameter to be measured, even exceed this limit, as long as, in normal operation, the parameter is such that the loss falls below this limit often. For instance, if the fibre is to be used to detect if the concentration of a chemical compound exceeds an given limit, the fibre can be built such that the loss stays below 20% while the concentration stays below the limit (or vice versa) - this still allows to reliably detect a transition of the limit.

**Claims**

1. A method for measuring at least one physical parameter using an optical resonator in an optical fiber, wherein said physical parameter affects an optical loss of the resonator and wherein a response of the resonator to dynamic light or loss changes is analyzed, **characterised in that** the optical loss of the resonator is not exceeding 20%.

2. The method of claim 1 wherein an intensity, polarization and/or wavelength of the light fed to the resonator or a resonance frequency of the resonator is changed in step-wise manner and wherein a time constant of a corresponding build-up or decay of the amount of light within the resonator is measured, and in particular wherein the amount of light is determined by monitoring the power of a fraction of light coupled out of the resonator.

3. The method of one of the preceding claims wherein an intensity of light fed into the resonator is modulated by changing the intensity of a light source, by modulating light from a light source in a light modulator or by modulating the coupling efficiency of a coupler coupling the light into the resonator.

4.  The method of one of the preceding claims, wherein said resonator is linear and has two reflectors, each reflector having a reflectivity exceeding 90%.

5.  The method of claim 4 wherein said physical parameter affects the reflectivity of at least one of the reflectors.

6.  The method of one of the preceding claims wherein the resonator has a plurality of longitudinal modes, and wherein a spectral range of said light is broad enough to excite a plurality, preferably more than three, of the longitudinal modes.

7.  The method of one of the preceding claims wherein light is fed to the resonator through a coupler (4) and wherein a coupling efficiency of the coupler (4) is modulated for modulating the light intensity within the fiber (3).

8.  The method of one of the preceding claims wherein the resonator is operated in transmission using a first coupler (4) for coupling light into the resonator and a second coupler (5) for coupling light from the resonator.

9.  The method of one of the claims 1 - 7 wherein the resonator is operated in reflection using a single coupler (4) for coupling light into and from the resonator.

10. The method of one of the preceding claims, wherein at least one grating reflector is arranged in the fiber, and in particular wherein the physical parameter affects the reflectivity of the grating reflector.

11. The method of one of the preceding claims wherein the physical parameter affects fibre temperature, fiber strain, fiber tension or fiber deformation.

12. The method of one of the preceding claims wherein said fiber has a tapered end (5') with an evanescent optical field extending from the tapered end, and in particular wherein said tapered end (5') is approached to an object to be scanned and said physical parameter depends on a distance between said end and said object and/or on optical properties of said object.

13. The method of claim 12 wherein the taper is at least partially in contact with an indicator agent having a refractive index or absorption that depends on the physical parameter, and, in particular wherein the refractive index is varied such that, depending on the physical parameter, the taper provides total internal reflection or no total internal reflection.

14. The method of one of the preceding claims wherein physical parameter affects the optical properties, in particular the absorption and/or the scattering, of a substance adjacent to said fiber in an outreaching evanescent field of the light, and in particular wherein the fiber has a core and a mantle with circular or elliptic cross-section except for a flat surface section approaching the core for receiving the substance.

15. The method of claim 14 wherein the substance is applied as a coating to at least part of the fiber.

16. The method of one of the preceding claims wherein an active medium emitting light under stimulation is arranged in said fiber and wherein said medium is stimulated for generating light in the fiber.

17. The method of one of the preceding claims wherein the physical parameter is an electric or a magnetic field influencing the loss of the resonator via electro-optic or magneto-optic effects.

18. The method of claim 17 wherein light propagation in the fiber depends on the polarization of the light and wherein the field induces birefringence or optical activity in the fiber, and in particular wherein the fiber is non-rotational.

19. The method of one of the preceding claims wherein the physical parameter affects scattering losses in the fiber, and in particular wherein the physical parameter affects a scattering grating (22) in the fibre.

20. The method of one of the preceding claims wherein the resonator fiber (3) forming the resonator is spliced to a feed fiber (2, 6) for feeding light to or from it.

21. The method of one of the preceding claims wherein the light fed to the resonator is switched between two wavelengths ($\lambda_1$, $\lambda_2$), preferably in step-wise manner, and wherein a beating between light of the two wavelengths is detected.

22. The method of claim 21 wherein the resonator is operated in transmission and comprises two reflectors, and wherein the reflectivity of at least one of the reflectors is much larger at one wavelength than at the other wavelength.

23. The method of one of the preceding claims wherein a light source (1) with an optical bandwidth of less than 7000 GHz is used.

24. The method of one of the preceding claims wherein pulses of light with a pulse width much shorter than a roundtrip-time of the resonator are coupled through an switched coupler into the resonator and wherein the coupler is switched from a first state with low reflectivity and high transmission to a second state with high reflectivity and low transmission, and wherein at least one light pulse is coupled into the resonator when the coupler is in its first state and a decay of the light pulse is analyzed when the coupler is in its second state.

25. The method of one of the preceding claims wherein the physical parameter is a parameter of a living body, and in particular wherein the fiber is inserted into the living body.

26. The method of one of the preceding claims wherein the physical parameter affects a degradation of the fibre.

light source | 2 | 4 | 3 | 5 | 6 | 7 | light detector
1

driver | signal processing

8 | 9

**Fig. 1**

(a)

0

(b)

0

**Fig. 2**

3 | 12

10

11

**Fig. 3**

2 | 4

15

3 | 5 | 6

15

**Fig. 4**

**Fig. 5**

**Fig. 6**

**Fig. 7**

**Fig. 8**

light source

2

4

3

5

6

7

light detector

1

pump

20

driver

signal processing

8

9

**Fig. 9**

2

4

22

3

5

6

**Fig. 10**

**European Patent Office**

# EUROPEAN SEARCH REPORT

Application Number

EP 00 12 1314

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>Y | US 5 508 804 A (FUERSTENAU NORBERT)<br>16 April 1996 (1996-04-16)<br>* column 6, line 48 - column 7, line 8;<br>figure 3 *<br>--- | 1,3,9,<br>11,20<br>2,4 | G01D5/353<br>G01L1/24 |
| X | US 4 269 506 A (JOHNSON MARK ET AL)<br>26 May 1981 (1981-05-26)<br>* column 10, line 44 - column 11, line 35;<br>figure 4 *<br>--- | 1 | |
| Y | US 4 738 527 A (MCBRIEN GREGORY J)<br>19 April 1988 (1988-04-19)<br>* column 5, line 27 - line 40 *<br>--- | 2 | |
| Y | US 5 714 680 A (LEE CHUNG-EUN ET AL)<br>3 February 1998 (1998-02-03)<br>* column 4, line 10 - line 12 *<br>--- | 4 | |
| A | US 4 420 251 A (AUGUST RUDOLF R ET AL)<br>13 December 1983 (1983-12-13)<br>* column 6, line 30 - column 8, line 20;<br>figures 10-12 *<br>--- | 10,19 | **TECHNICAL FIELDS SEARCHED (Int.Cl.7)** |
| A | US 3 808 557 A (SMILEY V)<br>30 April 1974 (1974-04-30)<br>* abstract *<br>--- | 6,21 | G01D<br>G01L<br>G01M<br>G01K |
| A | US 5 564 832 A (BALL GARY A ET AL)<br>15 October 1996 (1996-10-15)<br>* abstract *<br>--- | 6,21 | |
| A | US 4 475 812 A (BUCZEK CARL J ET AL)<br>9 October 1984 (1984-10-09)<br>* figure 3 *<br>--- | 6 | |
| A | US 5 290 398 A (SHU EMILY Y ET AL)<br>1 March 1994 (1994-03-01)<br>* abstract *<br>---<br>-/-- | 12-15 | |

~~The present search report has been drawn up for all claims~~

| Place of search | Date of completion of the search | Examiner |
|---|---|---|
| THE HAGUE | 12 July 2001 | Arca, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**Application Number**

EP 00 12 1314

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-15, 17-26

☐ None of the further search fees have been paid within the fixed time limit. The present European search report has been drawn up for those parts of the European patent application which relate to the invention first mentioned in the claims, namely claims:

## EUROPEAN SEARCH REPORT

European Patent
Office

Application Number

EP 00 12 1314

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | SHRIVER-LAKE L C ET AL: "THE EFFECT OF TAPERING THE OPTICAL FIBER ON EVANESCENT WAVE MEASUREMENTS" ANALYTICAL LETTERS,US,NEW YORK, NY, vol. 25, no. 7, 1992, pages 1183-1199, XP000566832 ISSN: 0003-2719 * the whole document * | 12-15 | |
| A | US 5 044 723 A (MACDONALD ROBERT I) 3 September 1991 (1991-09-03) * abstract * | 12-15 | |
| A | NATH N ET AL: "EVANESCENT WAVE FIBER OPTIC FLUOROSENSOR: EFFECT OF TAPERING CONFIGURATION ON THE SIGNAL ACQUISITION" OPTICAL ENGINEERING,US,SOC. OF PHOTO-OPTICAL INSTRUMENTATION ENGINEERS. BELLINGHAM, vol. 37, no. 1, 1998, pages 220-228, XP000736287 ISSN: 0091-3286 * the whole document * | 12-15 | TECHNICAL FIELDS SEARCHED (Int.Cl.7) |

~~The present search report has been drawn up for all claims~~

| Place of search | Date of completion of the search | Examiner |
|---|---|---|
| THE HAGUE | 12 July 2001 | Arca, G |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**European Patent Office**     **LACK OF UNITY OF INVENTION SHEET B**     **Application Number**

EP 00 12 1314

The Search Division considers that the present European patent application does not comply with the requirements of unity of invention and relates to several inventions or groups of inventions, namely:

1. Claims: 1-2, 3-5,8-11,17-20,23-26

   Optical resonator sensor based on the measurement of build-up or decay time constant within the resonant cavity

2. Claims: 6, 21, 22

   Optical resonator sensor operating with a plurality of wavelengths

3. Claims: 12-15

   Fiber optic sensor with tapered end measuring a physical parameter via evanescent optical field coupling

4. Claim : 16

   Resonator comprising an optically active medium

**ANNEX TO THE EUROPEAN SEARCH REPORT
ON EUROPEAN PATENT APPLICATION NO.**     EP 00 12 1314

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2001

| Patent document cited in search report | | Publication date | Patent family member(s) | | Publication date |
|---|---|---|---|---|---|
| US 5508804 | A | 16-04-1996 | DE | 4410134 A | 29-09-1994 |
| | | | FR | 2703147 A | 30-09-1994 |
| | | | GB | 2276449 A,B | 28-09-1994 |
| US 4269506 | A | 26-05-1981 | DE | 2816682 A | 20-12-1979 |
| US 4738527 | A | 19-04-1988 | EP | 0250354 A | 23-12-1987 |
| | | | JP | 62299702 A | 26-12-1987 |
| US 5714680 | A | 03-02-1998 | NONE | | |
| US 4420251 | A | 13-12-1983 | NONE | | |
| US 3808557 | A | 30-04-1974 | NONE | | |
| US 5564832 | A | 15-10-1996 | US | 5513913 A | 07-05-1996 |
| | | | DE | 69410595 D | 02-07-1998 |
| | | | DE | 69410595 T | 24-09-1998 |
| | | | DK | 681681 T | 12-10-1998 |
| | | | EP | 0681681 A | 15-11-1995 |
| | | | JP | 8506185 T | 02-07-1996 |
| | | | WO | 9417366 A | 04-08-1994 |
| US 4475812 | A | 09-10-1984 | NONE | | |
| US 5290398 | A | 01-03-1994 | NONE | | |
| US 5044723 | A | 03-09-1991 | NONE | | |

EPO FORM P0459

For more details about this annex : see Official Journal of the European Patent Office, No. 12/82